(19) Europäisches Patentamt
European Patent Office
Office européen des brevets

(11) Veröffentlichungsnummer: **0 037 372**
**A1**

(12) # EUROPÄISCHE PATENTANMELDUNG

(21) Anmeldenummer: **81810086.9**

(22) Anmeldetag: **09.03.81**

(51) Int. Cl.[3]: **C 09 B 57/04**
C 07 D 401/12, C 08 K 5/34

(30) Priorität: **13.03.80 CH 1980/80**

(43) Veröffentlichungstag der Anmeldung:
**07.10.81 Patentblatt 81/40**

(84) Benannte Vertragsstaaten:
**CH DE FR GB IT LI**

(71) Anmelder: **CIBA-GEIGY AG**
**Patentabteilung Postfach**
**CH-4002 Basel(CH)**

(72) Erfinder: **Lienhard, Paul, Dr.**
**Kirschgartenstrasse 14**
**CH-4402 Frenkendorf(CH)**

(54) **1:1-Nickelkomplexe von Isoindolin-azinen, Verfahren zu deren Herstellung und Verwendung.**

(57) 1:1-Nickelkomplexe von Isoindolin-azinen der Formel

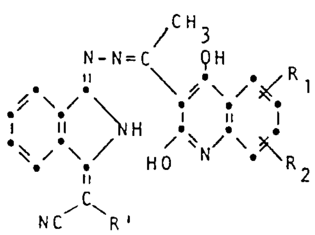

1) ,

worin R' eine Cyan-, Carbamoyl-, Benzylcarbamoyl-, Thiocarbamoylgruppe, eine Alkylcarbamoyl- oder Alkylthiocarbamoylgruppe mit 2 - 22 C, eine Alkoxyalkylcarbamoylgruppe mit 4 - 23 C oder eine Gruppe der Formel

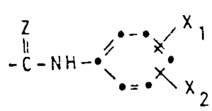

2) oder

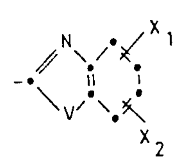

3)

bedeutet, worin Z ein Sauerstoff- oder Schwefelatom, V ein Sauerstoff-oder Schwefelatom oder den Rest -NH-, $X_1$ ein H-, Chlor- oder Bromatom, eine Nitro-, Trifluormethyl-, Carbamoyl- oder Sulfamoylgruppe, eine Alkyl-, Alkoxy- oder Alkylsulfamoylgruppe mit 1 - 22 C, eine Alkanoylamino- oder Alkylcarbamoylgruppe mit 2-22 C, eine gegebenenfalls durch Chlor- oder Bromatome oder Methylgruppen substituierte Phenoxy-, Phenylcarbamoyl-, Benzoylamino- oder Phenylsulfamoylgruppe und $X_2$ ein H-, Chlor- oder Bromatom, eine Alkyl- oder Alkoxygruppe mit 1-4 C bedeuten, $R_1$ ein H- oder Chloratom, eine Sulfamoylgruppe, eine gegebenenfalls durch Halogenatome, Alkyl- oder Alkoxygruppen mit 1-22 C substituierte Phenoxy-, Phenylmercapto-, Benzoylamino- oder Phenylsulfamoylgruppe eine Alkanoylaminogruppe mit 2-22 C bedeutet, wobei für den Fall, dass $R_1$ und $R_2$ H-oder Chloratome, Methyl- oder Alkoxygruppen mit 1-4 C bedeuten, R' eine Alkylcarbamoyl- oder Alkylthiocarbamoylgruppe mit 7-22 C eine Alkoxyalkylcarbamoylgruppe mit 7-23 C oder einen Rest der Formel 2) bedeutet, worin $X_1$ für einen Alkyl-, Alkoxy-, Alkylsulfamoyl- oder Alkanoylaminorest mit 6-22 C oder einen Alkylcarbamoylrest mit 7-23 C steht.

Die neuen Pigmente färben plastische Massen in farbstarken, brillanten orangen bis roten Tönen von guten Echtheiten.

EP 0 037 372 A1

3-12760 +

1:1-Nickelkomplexe von Isoindolin-azinen, Verfahren zu deren Herstellung und Verwendung

Die Erfindung betrifft 1:1-Nickelkomplexe von Isoindolin-azinen der Formel

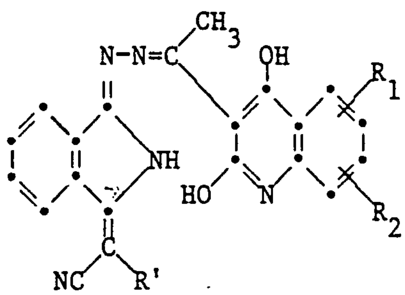 1)

worin R' eine Cyan-, Carbamoyl-, Benzylcarbamoyl- oder Thiocarbamoylgruppe, eine Alkylcarbamoyl- oder Alkylthiocarbamoylgruppe mit 2 - 22 C, eine Alkoxyalkylcarbamoylgruppe mit 4 - 23 C oder eine Gruppe der Formel

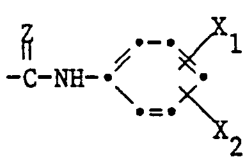 2) oder 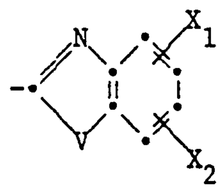 3)

bedeutet, worin Z ein Sauerstoff- oder Schwefelatom, V ein Sauerstoff- oder Schwefelatom oder den Rest -NH-, $X_1$ ein H-, Chlor- oder Bromatom, eine Nitro-, Trifluormethyl-, Carbamoyl- oder Sulfamoylgruppe, eine Alkyl-, Alkoxy- oder Alkylsulfamoylgruppe mit 1 - 22 C, eine Alkanoylamino- oder Alkylcarbamoylgruppe mit 2 - 22 C, eine gegebenenfalls durch Chlor- oder Bromatome oder Methylgruppen substituierte Phenoxy-, Phenylcarbamoyl-,Benzoylamino- oder Phenylsulfamoylgruppe und $X_2$ ein H-, Chlor- oder Bromatom, eine Alkyl- oder Alkoxygruppe

mit 1 - 4 C bedeuten, $R_1$ ein H- oder Chloratom, eine Alkyl oder Alkoxygruppe mit 1-4 C, $R_2$ ein H- oder Chloratom, eine Sulfamoylgruppe, eine gegebenenfalls durch Halogenatome, Alkyl- oder Alkoxygruppen mit 1-22 C substituierte Phenoxy-, Phenylmercapto-, Benzoyl-, oder Phenylsulfamoylgruppe, eine Alkanoylaminogruppe mit 2-22 C bedeutet, wobei für den Fall, dass $R_1$ und $R_2$ H- oder Chloratome, Methyl- oder Alkoxygruppen mit 1-4 C bedeuten, R' eine Alkylcarbamoyl- oder Alkylthiocarbamoylgruppe mit 7-22 C, eine Alkoxyalkylcarbamoylgruppe mit 7-23 C oder einen Rest der Formel 2) bedeutet, worin $X_1$ für einen Alkyl-, Alkoxy-, Alkylsulfamoyl- oder Alkanoylaminorest mit 6-22 C oder einen Alkylcarbamoylrest mit 7-23 C steht.

Nickelkomplexe der Formel 1), in welcher $R_1$ einen Rest der Formel

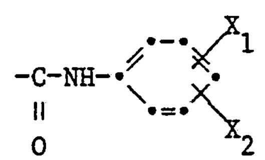

2a)

bedeutet, sind sehr echte Pigmente mit besonders reinem Farbton und sind daher bevorzugt. $X_1$ und $X_2$ haben die oben angegebene Bedeutung.

Durch besonders leichte Zugänglichkeit zeichnen sich Nickelkomplexe der Formel 1) aus, in welcher $R_1$ für eine Alkylcarbamoyl- oder Alkoxyalkylcarbamoylgruppe steht.

Bevorzugt sind die Ni-Komplexe der Formel

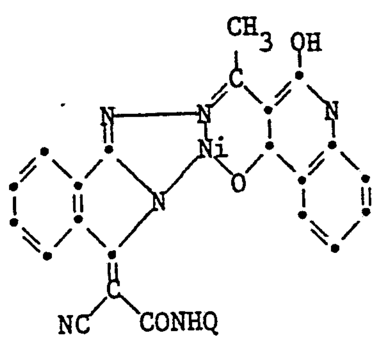

4)

worin Q eine Alkyl- oder Alkoxyalkylgruppe mit 8-22 C, oder eine Gruppe der Formel

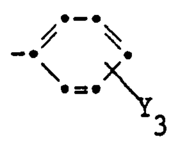

bedeutet, worin

$Y_3$ eine Alkoxy-, Alkylsulfamoyl- oder Alkanoylaminogruppe mit 8-22 C bedeutet.

Die Formeln 1) und 4) stellen nur eine der möglichen isomeren oder tautomeren Formen dar.

Zu den erfindungsgemässen Nickelkomplexen gelangt man, wenn man

a) ein Azin der Formel 1) mit nickelabgebenden Mitteln behandelt oder

b) ein Hydrazon der Formel

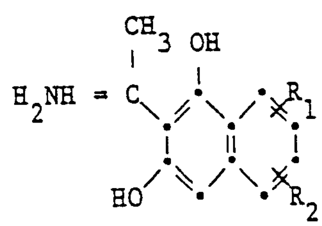

5)

worin $R_1$ und $R_2$ die angegebenen Bedeutungen haben, mit einem Isoindolinon der Formel

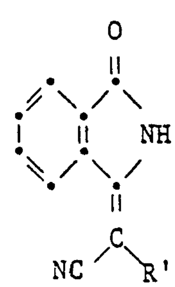

6)

worin R' die angegebene Bedeutung hat, in Gegenwart nickelabgebender Mittel in einem polaren organischen Lösungsmittel erhitzt.

Zu den Azinen der Formel 1) gelangt man beispielsweise nach dem in der GB-PS 1.467.595 beschriebenen Verfahren durch Kondensation eines Hydrazons der Formel 5) mit einem Imino-isoindolin der Formel

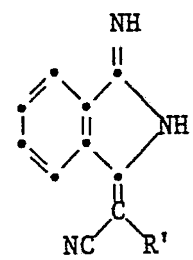

7)

worin R' die oben angegebene Bedeutung hat.

Die Imino-isoindoline der Formel 7) ihrerseits erhält man durch Kondensation des 1-Amino-3-imino-isoindolenins mit dem Acetonitril der Formel $NCCH_2R'$,
worin R' die angegebene Bedeutung hat. Als Beispiele seien die in der GB-PS 1.467.595, Seite 7 angeführten Acetonitrile erwähnt, ausserdem Cyanessigsäure-hexyl-, -2-äthylhexyl-, -2-äthylhexoxypropyl-, -dodecyl- oder-stearylamid

Cyanessigsäure-octylthioamid
Cyanessigsäure-p-dodecyl-phenylamid
Cyanessigsäure-p-octyloxy-phenylamid
Cyanessigsäure-m-octylsulfamoyl-phenylamid
Cyanessigsäure-p-stearylcarbamoyl-phenylamid
Cyanessigsäure-p-stearoylamino-phenylamid oder
Dodecylsulfamoyl- acetonitril

Man kann die Azine der Formel 1) aber auch durch Kondensation einer Acetylverbindung der Formel 9) mit einem Hydrazonoisoindolin der Formel 8) gewinnen

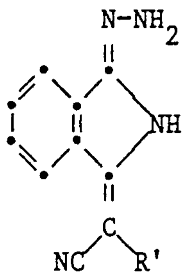

8) ,

worin R' die oben angegebene Bedeutung hat. Die hierfür benötigten Verbindungen der Formel 8) werden durch Umsetzung von Imino-isoindolinen der Formel 7) mit Hydrazinhydrat erhalten

Die Hydrazone der Formel 5) erhält man nach bekanntem Verfahren durch Kondensation des Chinolins der Formel

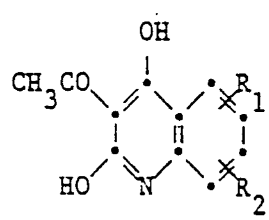

9)

worin $R_1$ und $R_2$ die angegebene Bedeutung haben, mit Hydrazinhydrat.

Als Beispiele seien die folgenden Chinoline genannt:

2,4-Dihydroxy-3-acetyl-7-carbomethoxy-chinolin
2,4-Dihydroxy-3-acetyl-7-carbamoyl-chinolin
2,4-Dihydroxy-3-acetyl-7-methylcarbamoyl-chinolin
2,4-Dihydroxy-3-acetyl-6- oder -7-phenoxy-chinolin
2,4-Dihydroxy-3-acetyl-6-phenoxy-8-chlorchinolin
2,4-Dihydroxy-3-acetyl-6-p-chlorphenoxy-chinolin
2,4-Dihydroxy-3-acetyl-6-p-methylphenoxy-chinolin
2,4-Dihydroxy-3-acetyl-6-p-methoxyphenoxy-chinolin
2,4-Dihydroxy-3-acetyl-6- oder -7-benzoylamino-chinolin
2,4-Dihydroxy-3-acetyl-7-phenylcarbamoyl-chinolin

2,4-Dihydroxy-3-acetyl-6- oder -7-phenylsulfamoyl-chinolin
2,4-Dihydroxy-3-acetyl-6-methyl-7-phenylsulfamoyl-chinolin
2,4-Dihydroxy-3-acetyl-6-methyl-7-benzoylamino-chinolin
2,4-Dihydroxy-3-acetyl-6-methoxy-7-benzoylamino-chinolin
2,4-Dihydroxy-3-acetyl-6-p-chlorbenzoylamino-chinolin
2,4-Dihydroxy-3-acetyl-6-p-methylbenzoylamino-chinolin
2,4-Dihydroxy-3-acetyl-6-p-methoxybenzoylamino-chinolin
2,4-Dihydroxy-3-acetyl-6- oder -7-acetylamino-chinolin
2,4-Dihydroxy-3-acetyl-6- oder -7-stearoylamino-chinolin
2,4-Dihydroxy-3-acetyl-6-2'-äthyl-hexanoylamino-chinolin
2,4-Dihydroxy-3-acetyl-6- oder -7-p-toluolsulfonylamino-chinolin
2,4-Dihydroxy-3-acetyl-6- oder -7-nitro-chinolin
2,4-Dihydroxy-3-acetyl-6-p-dodecylphenoxy-chinolin
2,4-Dihydroxy-3-acetyl-6- oder -7-phenylthio-chinolin
2,4-Dihydroxy-3-acetyl-6-sulfamoyl-chinolin
2,4-Dihydroxy-3-acetyl-6-methylsulfamoyl-chinolin
2,4-Dihydroxy-3-acetyl-6-phenylsulfamoyl-chinolin
2,4-Dihydroxy-3-acetyl-7-stearylcarbamoyl-chinolin
2,4-Dihydroxy-3-acetyl-7-2'-äthylhexylcarbamoyl-chinolin
2,4-Dihydroxy-3-acetyl-7-phenoxycarbonyl-chinolin.

Als nickelabgebende Mittel verwendet man vorzugsweise Nickelformiate, -acetate oder -stearate. Die Umsetzungen erfolgen in einem polaren Lösungsmittel, insbesondere einem solchen hydrophiler Natur, beispielsweise einem Amid wie Dimethylformamid, Formamid, Dimethylacetamid oder N-Methylpyrrolidon, ferner Dimethylsulfoxid, Acetonitril oder einem Alkohol wie beispielsweise Aethylcellosolve. Es kann auch ein Gemisch polarer Lösungsmittel verwendet werden.

Die Umsetzungstemperatur liegt zweckmässig zwischen 100 bis 200°C.

Die Isolierung des erhaltenen Metall-Komplexes erfolgt wie

üblich durch Filtration. Das Nutschgut wird mit Lösungsmittel gut gewaschen. Es wird in guter Ausbeute und Reinheit erhalten und kann ohne weitere Reinigung in feinverteilter Form zum Färben von hochmolekularem organischen Material verwendet werden, z.B. Celluloseäthern und -estern, wie Aethylcellulose, Acetylcellulose, Nitrocellulose, Polyamiden bzw. Polyurethanen oder Polyestern, natürlichen Harzen oder Kunstharzen, z.B. Aminoplasten, insbesondere Harnstoff- und Melamin-Formaldehydharzen, Alkydharzen, Phenoplasten, Polycarbonaten, Polyolefinen, wie Polystyrol, Polyvinylchlorid, Polyäthylen, Polypropylen, Polyacrylnitril, Polyacrylsäureester, thermoplastische oder härtbare Acrylharze, Gummi, Casein, Silikon und Silikonharzen, einzeln oder in Mischungen. Die erwähnten hochmolekularen Verbindungen können als plastische Massen, Schmelzen oder in Form von Spinnlösungen, Lacken oder Druckfarben vorliegen. Je nach Verwendungszweck erweist es sich als vorteilhaft, die neuen Pigmente als Toner oder in Form von Präparaten zu verwenden.

Das Pigment kann in der Form, wie es in der Synthese anfällt, oder in leicht gemahlener Form eingesetzt werden und liefert dann opake Ausfärbungen. Man kann es aber auch einer intensiveren Mahlung unterziehen und erhält dann transparente Ausfärbungen, wie beispielsweise farbstarke Metalleffektlackierungen.

Anreibungen der Pigmente in Lacken zeichnen sich durch ein günstiges Fliessverhalten aus.

Die erhaltenen Färbungen beispielsweise in Kunststoffen, Fasern und Lacken zeichnen sich durch Farbstärke, hohe Farbtonreinheit, gute Verteilung des Pigments, gute Ueberlackier-, Migrations-, Hitze-, Licht- und Wetterechtheit sowie durch einen guten Glanz aus.

Eine besonders hohe Farbstärke und leichte Dispergierbarkeit, speziell in Kunststoffen, weisen solche Pigmente auf, die in den Resten R' oder $R_2$ der Formel 1) einen Alkylrest mit 6 oder mehr C-Atomen aufweisen. Zudem zeigen Ausfärbungen solcher Pigmente in rohem Zustand in Kunststoffen bereits eine unerwartet hohe Transparenz.

In den nachfolgenden Beispielen bedeuten die Prozente Gewichtsprozente und die Grade Celsiusgrade. Es ist jeweils nur eine der möglichen isomeren und tautomeren Formen angegeben.

Beispiel 1: Eine Suspension von 24,8 g (0,09 Mol) des Hydrazons von 3-Acetyl-7-carbomethoxy-2,4-dihydroxychinolin und 23,6 g (0,0945 Mol) Nickelacetat-tetrahydrat in 1400 ml N-Methylpyrrolidon wird auf 60° erwärmt und mit 26 g (0,09 Mol) 1-(Cyano-N-phenylcarbamoylmethylen)-isoindolin-3-on versetzt. Die Mischung wird im Verlaufe einer Stunde auf 150° erhitzt und 3 Std. bei dieser Temperatur gerührt. Das Produkt fällt in Form von orangen Nadeln aus. Man filtriert es bei 100° ab, wäscht es gründlich mit N-Methylpyrrolidon, Methanol und Aceton und trocknet es bei 80° im Vakuum. Die Auswage beträgt 38,1 g an Metallkomplex der Zusammensetzung $C_{30}H_{20}N_6NiO_5$, der noch 2% Wasser enthält.

Die Mikroanalyse:

| | C | H | N | Ni |
|---|---|---|---|---|
| % ber. | 58,54 | 3,50 | 13,65 | 9,45 |
| % gef. | 58,4 | 3,6 | 14,0 | 9,79 |

bestätigt die Formel:

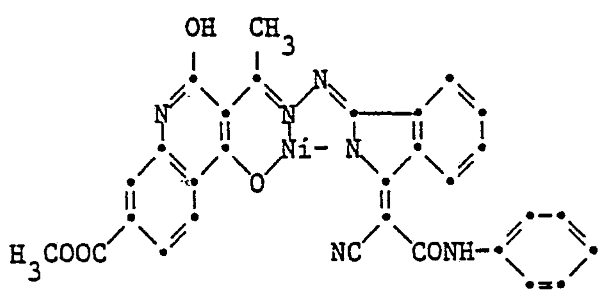

Nur eine der möglichen tautomeren Formeln wurde dabei berücksichtigt.

Beispiele 2 bis 51: Ebenfalls wertvolle Pigmente erhält man bei analoger Arbeitsweise, wenn man ein Hydrazon der Formel

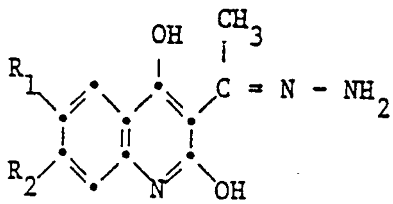

worin $R_1$ und $R_2$ die in den Kolonnen 2 und 3 der folgenden Tabelle 1 angegebenen Bedeutungen haben, mit einem Isoindolinon der Formel

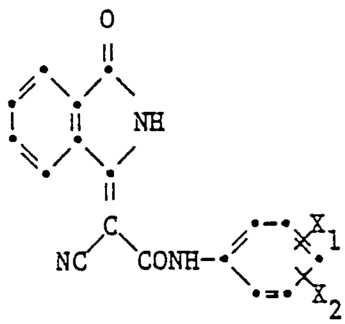

worin $X_1$ und $X_2$ die in den Kolonnen 4 und 5 angegebenen Bedeutungen haben, in Gegenwart von Nickelacetat kondensiert.
Die 1:1-Nickelkomplexe liefern in feiner Verteilung in Kunststoffen, Folien und Lacken sehr brillante und echte Ausfärbungen, deren Farbton in Kolonne 5 wiedergegeben ist.

Tabelle 1

| Beisp. No. | $R_1$ | $R_2$ | $X_1$ | $X_2$ | Farbton |
|---|---|---|---|---|---|
| 2 | H | $-COOCH_3$ | 2-Cl | H | orange |
| 3 | H | do | 3-Cl | H | orange-rot |
| 4 | H | do | 4-Cl | H | - do - |
| 5 | H | do | 2-Methyl | H | - do - |
| 6 | H | do | 3-Methyl | H | - do - |
| 7 | H | do | 4-Methyl | H | rot |
| 8 | H | do | 2-Methoxy | H | rot |
| 9 | H | do | $4-OCH_3$ | H | orange-rot |
| 10 | H | do | 4-Phenylazo | H | rot |
| 11 | H | do | 4-Benzoylamino | H | rot |
| 12 | H | do | 4-Carbamoyl | H | rot |
| 13 | H | do | $3-CF_3$ | H | orange |
| 14 | H | do | $4-NO_2$ | H | - do - |
| 15 | H | do | 4-Phenoxy | H | rot |
| 16 | H | do | 2-Cl | 4-Cl | orange |
| 17 | H | do | 2-Cl | 5-Cl | - do - |
| 18 | H | do | 3-Cl | 4-Cl | - do - |
| 19 | H | do | 3-Methyl | 4-Methyl | orange-rot |
| 20 | H | do | do | 5-Methyl | rot |
| 21 | H | $-COOCH_3$ | 3-Cl | $4-CH_3$ | orange |
| 22 | H | do | 2-Methoxy | $5-OCH_3$ | orange-rot |
| 23 | H | do | 4-Sulfamoyl | H | rot |
| 24 | H | do | 4-Carbamoyl | 3-Cl | orange-rot |
| 25 | H | do | 4-Dimethyl-maleinimido | H | - do - |
| 26 | H | do | 4-p-Methoxy-phenoxy | $2,5-di-OCH_3$ | rot |
| 27 | H | do | 4-Phthal-imido | H | orange-rot |
| 28 | H | do | 4-o-Methyl-phenylazo | $2-CH_3$ | - do - |

Tabelle 1

| Beisp. No. | $R_1$ | $R_2$ | $X_1$ | $X_2$ | Farbton |
|---|---|---|---|---|---|
| 29 | H | $-COOCH_3$ | 4-p-Acetyl-aminophenyl-carbamoyl | H | orange-rot |
| 30 | H | do | 2-Cl | $5-CF_3$ | - do - |
| 31 | Benzo-ylamino | H | 2-Cl | H | orange-rot |
| 32 | do | H | 3-Cl | H | rot |
| 33 | do | H | 4-Cl | H | rot |
| 34 | do | H | $4-OCH_3$ | H | rot |
| 35 | do | H | 4-Carbamoyl | H | rot |
| 36 | do | H | $3-CF_3$ | H | orange-rot |
| 37 | do | H | 4-Acetyl-amino | H | rot |
| 38 | do | H | $4-CH_3$ | H | rot |
| 39 | H | $-COOCH_3$ | $3-CF_3$ | 4-Cl | rot |
| 40 | H | do | $3-CF_3$ | 6-Cl | rot |
| 41 | Phenoxy | H | H | H | rot |
| 42 | do | H | 2-Cl | H | orange-rot |
| 43 | do | H | 3-Cl | H | - do - |
| 44 | do | H | 4-Cl | H | rot |
| 45 | do | H | $3-CF_3$ | H | orange-rot |
| 46 | do | H | $4-CH_3$ | H | rot |
| 47 | p-Meth-oxy-phenoxy | H | 2-Cl | H | rot |
| 48 | do | H | 3-Cl | H | rot |
| 49 | do | H | 4-Cl | H | rot |
| 50 | do | H | $3-CF_3$ | H | rot |
| 51 | do | H | 4-Acetyl-amino | H | rot |

Beispiel 52: 1,52 g (0,007 Mol) 2,4-Dihydroxy-3-acetylchinolin-hydrazon und 1,84 g (0,0074 Mol) Nickelacetat-tetrahydrat werden in 80 ml N-Methylpyrrolidon auf 60° erwärmt. Die braune Suspension wird mit 4,0 g (0,007 Mol) 1-(Cyano-N-p-stearoylaminophenyl-carbamoyl-methylen)-isoindolinon-3 versetzt, auf 155-160° erhitzt und 4 Std. gerührt. Dabei fällt das Produkt in roten Nadeln aus. Man isoliert es durch Filtration bei 100°, wäscht es mit Dimethylformamid, Methanol und Aceton und trocknet es bei 80° im Vakuum. Man erhält 2,8 g Metallkomplex der Formel

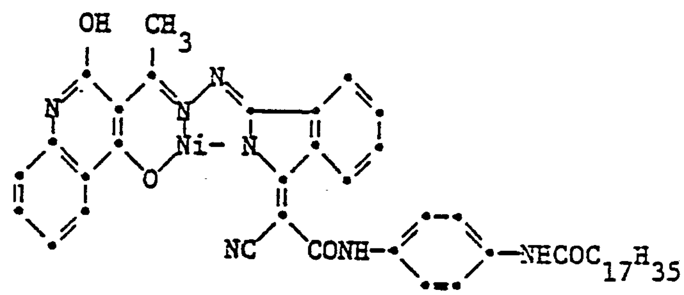

Mikroanalyse:

| | C | H | N | Ni |
|---|---|---|---|---|
| % ber. | 66,83 | 6,46 | 11,86 | 7,10 |
| % gef. | 66,8 | 6,6 | 11,6 | 6,83 |

Das Produkt färbt Lacke, Folien und Kunststoffe in kräftigen blaustichig roten Tönen von ausgezeichneter Licht-, Wetter-, Hitze- und Migrationsechtheit.

Beispiele 53-64: Ebenfalls wertvolle Pigmente erhält man ausgehend von einem Hydrazon der Formel

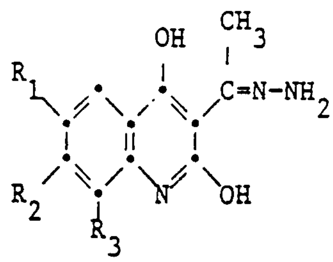

worin $R_1$ bis $R_3$ die in den Kolonnen 2-4 der Tabelle 2 angegebenen Bedeutungen haben, und einem Isoindolinon der Formel

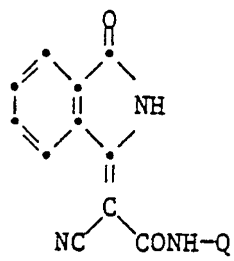

worin Q die in Kolonne 5 angegebene Bedeutung hat, bei analoger Arbeitsweise wie Beispiel 52. Der Farbton von Ausfärbungen in PVC ist in Kolonne 6 wiedergegeben.

Tabelle 2

| Beisp. No. | $R_1$ | $R_2$ | $R_3$ | Q | Farbton |
|---|---|---|---|---|---|
| 53 | H | H | H | $-(CH_2)_{17}CH_3$ | orange-rot |
| 54 | H | H | H | $-CH_2CH(C_2H_5)(CH_2)_3CH_3$ | orange-rot |
| 55 | Cl | H | Cl | $-(CH_2)_{17}CH_3$ | orange |
| 56 | H | $COOCH_3$ | H | $-(CH_2)_{17}CH_3$ | orange |
| 57 | $CH_3$ | H | H | 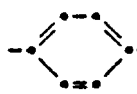 $-NHCO(CH_2)_{16}CH_3$ | blaustichig rot |
| 58 | Cl | H | Cl | dito | dito |
| 59 | H | $COOCH_3$ | H | dito | dito |
| 60 | H | H | H | 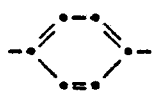 $-(CH_2)_{11}CH_3$ | rot |
| 61 | H | H | H | 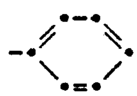 $-OC_8H_{17}$ | rot |
| 62 | H | H | H | 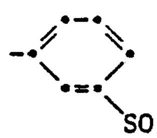 $SO_2NH(CH_2)_7CH_3$ | rot |
| 63 | H | H | H | 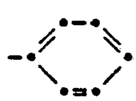 $-COOC_{12}H_{25}$ | rot |
| 64 | H | H | H | 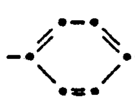 $-CONHC_{18}H_{37}$ | rot |

Beispiel 65: 2,75 g (0,01 Mol) des Hydrazons von 3-Acetyl-7-carbomethoxy-2,4-dihydroxychinolin und 2,6 g Nickelacetat-tetrahydrat (0,0105 Mol) werden in 60 ml N-Methylpyrrolidon angeschlämmt und auf 60° erwärmt. Zu der braunen Suspension gibt man 3,03 g (0,01 Mol) 1-(Cyano-N-benzylcarbamoyl-methylen)-isoindolin-3-on. Die Mischung wird auf 155° erwärmt und 3 Std. gerührt. Nach Abkühlen auf 100° filtriert man sie und wäscht das Filtergut mit N-Methylpyrrolidon und Methanol. Durch Trocknen bei 80° im Vakuum erhält man 2,7 g eines roten Pigmentes der Zusammensetzung $C_{31}H_{22}N_6NiO_5$.

Mikroanalyse:

| | C | H | N | Ni |
|---|---|---|---|---|
| % ber. | 60,32 | 3,59 | 13,62 | 9,51 |
| % gef. | 59,9 | 3,6 | 13,8 | 9,50 |

Eine durch Salzmahlung in eine feine Form übergeführte Probe des Pigments liefert in PVC-Folien und Einbrennlacken farbstarke, brillante, orange Ausfärbungen mit sehr guter Migrations-, Licht- und Wetterechtheit.

Beispiel 66: Ein ebenfalls wertvolles Pigment erhält man bei der im Beispiel 65 angegebenen Arbeitsweise aus 1-(Cyano-N-methylcarbamoylmethylen)-isoindolin-3-on.

Beispiel 67: In einem Laboratoriums-Kneter von 250 Vol.-Teilen Inhalt legt man 25 Teile des gemäss Beispiel 1 hergestellten Pigments, 100 Teile feingemahlenes Natriumchlorid und 30 Teile Diacetonalkohol vor. Man knetet die Mischung während 5 Stunden unter Kühlung und trägt sie dann in 4000 Vol.-Teile Wasser ein. Natriumchlorid sowie Diacetonalkohol gehen in Lösung, das Pigment fällt aus. Man filtriert die Suspension, wäscht das Nutschgut gründlich mit Wasser und trocknet es im Vakuumtrockenschrank bei 80°.

<u>Beispiel 68:</u> 56,5 g (0,5 Mol) Cyanessigsäureäthylester und 64,6 g (0,5 Mol) 2-Aethylhexylamin werden 1 Stunde bei 130 - 140° gerührt und das freigesetzte Aethanol abdestilliert. Aus dem Reaktionsgemisch werden durch Destillation bei 130°/0,1 Torr 61,6 g Säureamid folgender Formel erhalten:

$NCCH_2CONHCH_2CH(CH_2)_3CH_3$

$C_2H_5$

$C_{11}H_{20}N_2O$

| | | | |
|---|---|---|---|
| ber. | 67,3 % C | 10,3 % H | 14,3 % N |
| gef. | 67,3 % C | 10,4 % H | 14,1 % N |

19,6 g (0,1 Mol) dieses Säureamides, 18,2 g (0,1 Mol) 1-Imino-isoindolin-3-on-Hydrochlorid und 11,1 g (0,135 Mol) Natriumacetat werden in 100 ml Aethylcellosolve 4 Stunden bei 110° gerührt. Die Suspension wird unter Rühren erkalten gelassen und mit 100 ml Isopropylalkohol verdünnt. Durch Abfiltrieren, Waschen mit Isopropyl-Alkohol sowie Wasser und Trocknen erhält man 19,5 g eines bei 121 bis 122° schmelzenden Produktes, dessen Microanalyse auf das Methinisoindolinon folgender Formel stimmt:

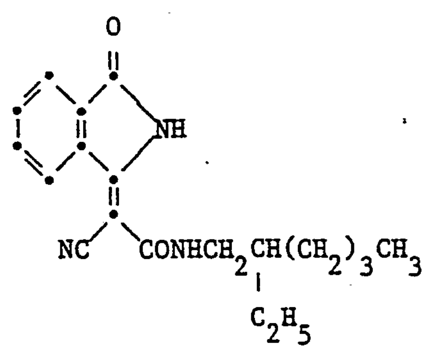

$C_{19}H_{23}N_3O_2$

| | | | |
|---|---|---|---|
| ber. | 70,1 % C | 7,1 % H | 12,9 % N |
| gef. | 69,7 % C | 7,1 % H | 13,3 % N |

1,52 g (0,007 Mol) des durch Umsetzung von 3-Acetyl-2,4-dihydroxychinolin und Hydrazinhydrat in Alkohol erhaltenen Hydrazons und 1,84 g (0,00735 Mol) Nickelacetat-tetrahydrat werden in 60 ml N-Methylpyrrolidon 1/2 Stunde bei 60° gerührt. Nach Zugabe von 2,28 g (0,007 Mol) obigen Methinisoindolinons wird die Mischung auf 150 bis 155° erhitzt und 3 Stunden gerührt. Die orange-farbene Suspension wird auf 70° abgekühlt, mit 50 ml Methanol verdünnt und unter Rühren erkalten gelassen. Das Produkt wird abfiltriert, mit Methanol gewaschen und getrocknet. Gewicht: 2,0 g. Es handelt sich um die Verbindung folgender bzw. einer tautomeren Formel:

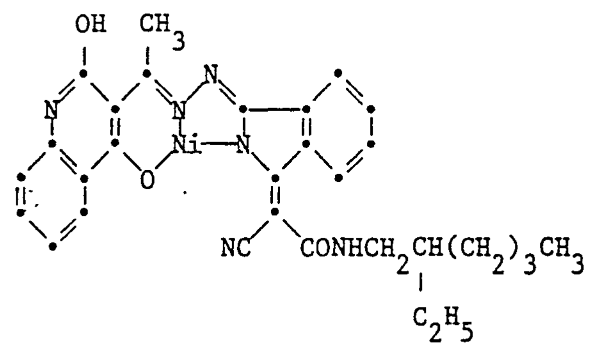

$C_{30}H_{30}N_6NiO_3$

| | | | | |
|---|---|---|---|---|
| ber. | 62,0 % C | 5,2 % H | 14,5 % N | 10,1 % Ni |
| gef. | 62,0 % C | 5,4 % H | 14,7 % N | 9,9 % Ni |

Das Produkt liefert in PVC-Folien und Lacken kräftig orange Ausfärbungen mit sehr guten Echtheiten.

Beispiel 69: 1,52 g (0,007 Mol) des Hydrazons aus 3-Acetyl-2,4-dihydroxychinolin und 1,84 g (0,00735 Mol) Nickelacetat-tetrahydrat werden in 60 ml N-Methylpyrrolidon 1/2 Stunde bei 60° gerührt. Nach Zugabe von 2,93 g (0,007 Mol) 1-(Cyano-N-p-n-octyl-oxyphenylcarbamoyl-methylen)-isoindolin-3-on wird die Mischung erhitzt und 3 Stunden bei 150 bis 155° gerührt.

Das Produkt nachstehender Formel (nur eine der möglichen tautomeren Formen wurde berücksichtigt) fällt in roten Nadeln aus. Man filtriert es bei 100° ab, wäscht mit Dimethylformamid und Methanol und trocknet es bei 80° im Vakuum. Gewicht: 2,6 g.

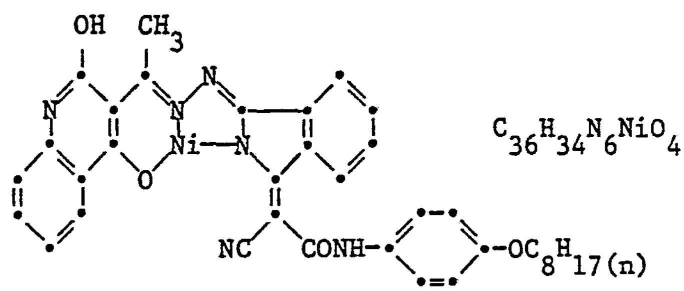

$C_{36}H_{34}N_6NiO_4$

| | | | | |
|---|---|---|---|---|
| ber. | 64,2 % C | 5,1 % H | 12,5 % N | 8,7 % Ni |
| gef. | 64,6 % C | 5,4 % H | 12,7 % N | 8,6 % Ni |

In feine Verteilung gebracht färbt das Produkt Kunststoffe und Lakke in kräftigen, reinen blaustichig roten Tönen von ausgezeichneter Migrations- und Lichtechtheit.

Beispiele 70-92: Ebenfalls wertvolle Pigmente erhält man bei analoger Arbeitsweise, wenn man ein Hydrazon der Formel

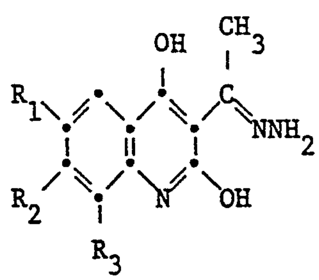
,

worin $R_1$ bis $R_3$ die in den Kolonnen 2 bis 4 der Tabelle 3 angegebene Bedeutung haben, in Gegenwart eines Nickelsalzes mit einem Isoindolinon der Formel

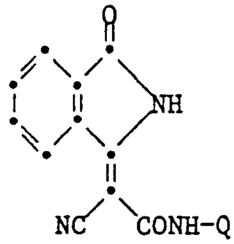

,

worin Q die in Kolonne 5 angegebene Bedeutung hat, zur Reaktion bringt. Der Farbton von Ausfärbungen in Polyvinylchlorid ist in Kolonne 6 angegeben.

Tabelle 3

| Beisp. No. | $R_1$ | $R_2$ | $R_3$ | Q | Farbton |
|---|---|---|---|---|---|
| 70 | H | $-COOCH_3$ | H | $-CH_2CH(CH_2)_3CH_3$<br>\|<br>$C_2H_5$ | orange |
| 71 | H | H | H | $-(CH_2)_3OCH_2-CH(CH_2)CH_3$<br>\|<br>$C_2H_5$ | orange |
| 72 | H | $-COOCH_3$ | H | dito | orange |
| 73 | H | $-COOCH_3$ | H | 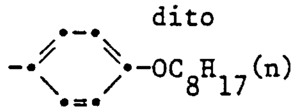 | rot |
| 74 | Cl | H | Cl | 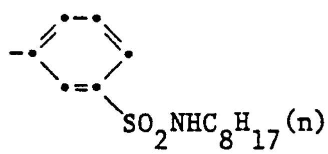 | rot |
| 75 | H | $-COOCH_3$ | H | dito | orange |
| 76 | H | H | H | 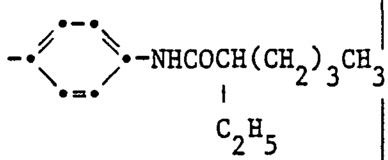 | rot |
| 77 | H | $-COOCH_3$ | H | dito | rot |
| 78 | 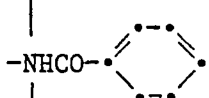 | H | H | H | orange |

Tabelle 3 (Fortsetzung)

| Beisp. No. | $R_1$ | $R_2$ | $R_3$ | Q | Farbton |
|---|---|---|---|---|---|
| 79 | -NHCO- 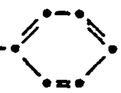 | H | H | $-CH_2CH(C_2H_5)(CH_2)_3CH_3$ | orange |
| 80 | dito | H | H | $-(CH_2)_{17}CH_3$ | orange |
| 81 | dito | H | H | $-(CH_2)_3OCH_2-CH(C_2H_5)(CH_2)_3CH_3$ | orange |
| 82 | H | $-COOCH_3$ | H | H | orange |
| 83 | $-NHCOCH_3$ | H | H | H | orange |
| 84 | $-NHCOCH_3$ | H | H | $-(CH_2)_{17}CH_3$ | orange |
| 85 | $-NHCOCH_3$ | H | H | 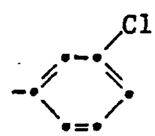 | rot |
| 86 | $-NHCOCH_3$ | H | H | 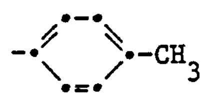 | rot |
| 87 | $-SO_2NH_2$ | H | H | H | orange |
| 88 | $-SO_2NH_2$ | H | H | 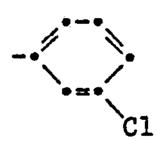 | orange |
| 89 | $-SO_2NH_2$ | H | H | 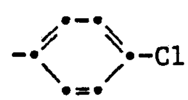 | rot |
| 90 | H | H | $-OCH_3$ | $-(CH_2)_{17}CH_3$ | rot |
| 91 | H | H | $-OCH_3$ | 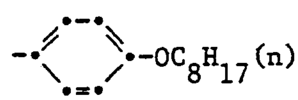 | rot |
| 92 | H | H | $-OCH_3$ | 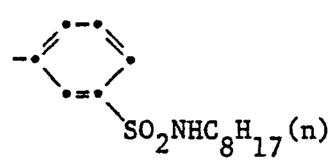 | orange |

Beispiel 93: Arbeitet man wie in Beispiel 65 beschrieben, setzt aber anstelle des 1-(Cyano-N-benzylcarbamoyl-methylen)-isoindolin-3-ons 2,85 g 1-(Cyano-benzimidazolyl-methylen)-isoindolin-3-on ein, so erhält man ebenfalls ein sehr echtes, oranges Pigment.

Beispiel 94: Bei analoger Arbeitsweise wie Beispiel 69 erhält man aus 1,92 g 3-Acetyl-6-acetylamino-2,4-dihydroxy-chinolinhydrazon, 1,84 g Nickelacetat-tetrahydrat und 1,6 g 1-(Cyano-thiocarbamoyl-methylen)-isoindolin-3-on ein Pigment, das Kunststoffe und Lacke in echten blaustichig roten Tönen färbt.

Beispiel 95: 65 Teile stabilisiertes Polyvinylchlorid, 35 Teile Dioctylphthalat und 0,2 Teile des gemäss Beispiel 67 erhaltenen Pigmentes werden miteinander verrührt und dann auf einem Zweiwalzenkalander während 7 Minuten bei 140° hin- und hergewalzt. Man erhält eine orange-rot gefärbte Folie von sehr guter Licht- und Migrationsechtheit.

Beispiel 96: 10 g Titandioxyd und 2 g des nach Beispiel 1 hergestellen Pigments werden mit 88 g einer Mischung von 26,4 g Kokosalkydharz, 24,0 g Melamin-Formaldehydharz (50% Festkörpergehalt), 8,8 g Aethylenglykolmonomethyläther und 28,8 g Xylol während 48 Stunden in einer Kugelmühle vermahlen.

Wird dieser Lack auf eine Aluminiumfolie gespritzt, 30 Minuten bei Raumtemperatur vorgetrocknet und dann während 30 Minuten bei 120° eingebrannt, dann erhält man eine Rotlackierung, die sich bei guter Farbstärke durch eine sehr gute Ueberlackier-, Licht- und Wetterechtheit auszeichnet.

Beispiel 97: 4 Teile des fein verteilten Pigments gemäss Beispiel 67 werden in 20 Teilen Lösungsmittel der folgenden Zusammensetzung eingerührt: 50 Teile Solvesso 150 (Gemisch aromatischer Kohlenstoffe), 15 Teile Butylacetat, 5 Teile Exkin II (Verlaufmittel auf Ketoximbasis), 25 Teile Methyl-isobutylketon, 5 Teile Silikonöl (1% in Solvesso 150).

Nachdem die vollständige Feinverteilung erreicht ist (je nach Art des Rührens in ca. 15-60 Minuten), werden die Bindemittel zugesetzt, nämlich 48,3 Teile Baycryl L 530 (Acrylharz) (51% in Xylol/Butanol 3:1) und 23,7 Teile Maprenal TTX (Melaminharz) (55% in Butanol).

Nach kurzem Homogenisieren wird der Lack nach üblichen Methoden wie Spritzen und Tauchen oder speziell zur kontinuierlichen Beschichtung von Metallblechen im "Coil-Coating"-Verfahren appliziert und eingebrannt (Einbrennen 30 Minuten, 130°). Die erhaltenen roten Lackierungen zeichnen sich aus durch sehr guten Verlauf, hohen Glanz und ausgezeichnete Feinverteilung des Pigmentes, sowie durch ausgezeichnete Wetterechtheiten.

Beispiel 98: Verfährt man wie in Beispiel 67 beschrieben, fügt jedoch der Knetmasse 2,78 Teile Staybelite Resin (HERCULES) zu, so erhält man ein Pigment, enthaltend 10% Harz, das sich auszeichnet durch leichtere Einarbeitbarkeit und bessere Verteilbarkeit.

Patentansprüche:

1. 1:1-Nickelkomplexe von Isoindolin-azinen der Formel

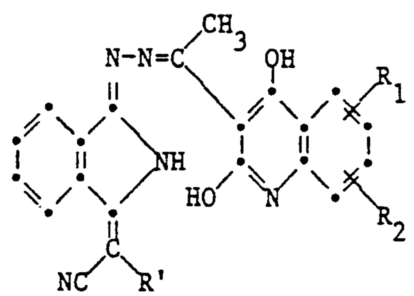

1)

worin R' eine Cyan-, Carbamoyl-, Benzylcarbamoyl- oder Thiocarbamoylgruppe, eine Alkylcarbamoyl- oder Alkylthiocarbamoylgruppe mit 2 - 22 C, eine Alkoxyalkylcarbamoylgruppe mit 4 - 23 C oder eine Gruppe der Formel

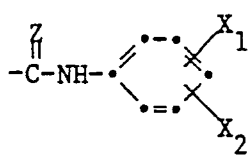

2) oder

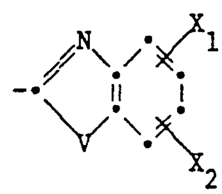

3)

bedeutet, worin Z ein Sauerstoff- oder Schwefelatom, V ein Sauerstoff- oder Schwefelatom oder den Rest -NH-, $X_1$ ein H-, Chlor- oder Bromatom, eine Nitro-, Trifluormethyl-, Carbamoyl- oder Sulfamoylgruppe, eine Alkyl-, Alkoxy- oder Alkylsulfamoylgruppe mit 1 - 22 C, eine Alkanoylamino- oder Alkylcarbamoylgruppe mit 2 - 22 C, eine gegebenenfalls durch Chlor- oder Bromatome oder Methylgruppen, substituierte Phenoxy-, Phenylcarbamoyl-, Benzoylamino- oder Phenylsulfamoylgruppe und $X_2$ ein H-, Chlor- oder Bromatom, eine Alkyl- oder Alkoxygruppe mit 1-4 C bedeuten, $R_1$ ein H- oder Chloratom, eine Alkyl- oder Alkoxygruppe mit 1 - 4 C, $R_2$ ein H- oder Chloratom, eine Sulfamoylgruppe, eine gegebenenfalls durch Halogenatome, Alkyl- oder Alkoxygruppen mit 1 - 22 C substituierte Phenoxy-, Phenylmercapto-, Benzoylamino- oder Phenylsulfamoylgruppe oder eine Alkanoylaminogruppe mit 2 - 22 C bedeutet, wobei für den Fall, dass $R_1$ und $R_2$ H- oder Chloratome, Methyl- oder Alkoxygruppen mit 1-4 C bedeuten, R' eine Alkylcarbamoyl- oder Alkylthiocarbamoylgruppe mit 7 - 22 C, eine Alkoxyalkylcarbamoylgruppe mit 7 - 23 C oder einen Rest der Formel 2) bedeutet, worin $X_1$ für einen Alkyl-, Alkoxy-, Alkylsulfamoyl- oder Alkanoylaminorest mit 6 - 22 C oder einen Alkylcarbamoylrest mit 7 - 23 C steht.

2. Nickelkomplexe gemäss Anspruch 1, worin R' einen Rest der Formel

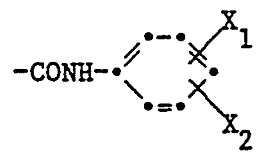

bedeutet, worin $X_1$ und $X_2$ die im Anspruch 1 angegebene Bedeutung haben.

3. Nickelkomplexe gemäss Anspruch 1, worin R' eine Alkylcarbamoylgruppe mit 2 - 22 C oder eine Alkoxyalkylcarbamoylgruppe mit 4 - 23 C bedeutet.

4. Nickelkomplexe gemäss Anspruch 1 der Formel

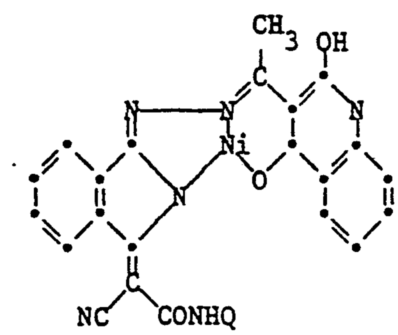

4) ,

worin Q eine Alkyl- oder Alkoxyalkylgruppe mit 8 - 22 C, oder eine Gruppe der Formel

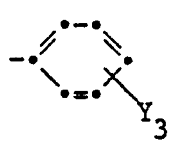

bedeutet, worin

$Y_3$ eine Alkoxy-, Alkylsulfamoyl- oder Alkanoylaminogruppe mit 8 - 22 C bedeutet.

5. Verfahren zur Herstellung der Nickelkomplexe gemäss Anspruch 1, dadurch gekennzeichnet, dass man

a) ein Azin der Formel 1) mit Nickel-abgebenden Mitteln behandelt oder

b) ein Hydrazon der Formel

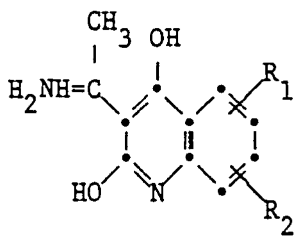

5) ,

worin $R_1$ und $R_2$ die angegebenen Bedeutungen haben, mit einem Isoindolinon der Formel

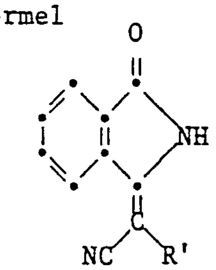

6) ,

worin R' die angegebene Bedeutung hat, in Gegenwart Nickel-abgebender Mittel in einem polaren organischen Lösungsmittel erhitzt.

6. Verfahren zum Färben von hochmolekularem organischen Material, gekennzeichnet durch die Verwendung der Nickelkomplexe gemäss Anspruch 1.

7. Hochmolekulares organisches Material enthaltend einen Nickelkomplex gemäss Anspruch 1.

0037372

Nummer der Anmeldung

EP 81 81 0086

Europäisches Patentamt

# EUROPÄISCHER RECHERCHENBERICHT

| Kategorie | EINSCHLÄGIGE DOKUMENTE<br>Kennzeichnung des Dokuments mit Angabe, soweit erforderlich, der maßgeblichen Teile | betrifft Anspruch | KLASSIFIKATION DER ANMELDUNG (Int Cl ) |
|---|---|---|---|
| D | DE - A - 2 504 321 (CIBA-GEIGY)<br>* Seite 3, Formel 5 *<br>& GB - A - 1 467 595<br>-- | 1-7 | C 09 B 57/04<br>C 07 D 401/12<br>C 08 K 5/34 |
| A | DE - A - 2 142 245 (BASF)<br>---- | | |

RECHERCHIERTE SACHGEBIETE (Int. Cl.³)

C 09 B 57/04
C 07 D 401/12

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Grunden angefuhrtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 30-06-1981 | DAUKSCH |